# EUROPEAN PATENT SPECIFICATION

(11) **EP 4 464 152 B1**
(45) Date of publication and mention of the grant of the patent: **29.10.2025**
(21) Application number: 24175017.3
(22) Date of filing: 09.05.2024
(51) Int. Cl.: A01K 13/00, D04B 21/20, D06C 11/00

(54) **BLANKET FOR UNGULATES AND RELATED PRODUCTION PROCESS**
DECKE FÜR HUFTIERE UND ZUGEHÖRIGES HERSTELLUNGSVERFAHREN
COUVERTURE POUR ONGULÉS ET PROCÉDÉ DE PRODUCTION ASSOCIÉ

(30) Priority: 19.05.2023 IT 202300010227
(43) Date of publication of application: 20.11.2024
(73) Proprietor: Agripool S.r.l., 25015 Desenzano Del Garda, Brescia (IT)
(72) Inventor: MARITANO, RICCARDO, 25015 DESENZANO DEL GARDA (IT)
(74) Representative: Tirloni, Bartolomeo

(56) References cited:
- EP-B1- 0 429 802
- CZ-U1- 24 555
- DE-U1- 202016 105 361
- GB-A- 2 174 728
- US-B1- 6 770 581

## Description

### Technical field of the art

The present invention relates to a blanket for ungulates (equines, etc.) and a related production process.

### State of the art

Protective devices (e.g. blankets, cloaks, hoods, saddle pads, etc.) for animals are known, particularly in the field of horse racing.

The document CZ24555U1 describes a protective device for animals, in particular for equines.

### Summary of the invention

In the field of protective devices for animals, the Applicant has faced the problem of realizing a blanket for ungulates that results simple, quick and economical to industrially produce, and at the same time equipped with desired features for guaranteeing the comfort of the animal, for example in terms of thermal protection (from cold and/or heat) and/or breathability.

According to the Applicant, the aforementioned problem is solved by a blanket for ungulates and a related production process according to the attached claims and/or having one or more of the following features.

According to an aspect the invention relates to a blanket for ungulates. The blanket comprises a warp-knitted fabric. The warp-knitted fabric comprises a plurality of first yarns and a plurality of second yarns, the first and second yarns being directly mutually knitted so that a first face of said fabric is mainly made by said plurality of first yarns, and a second face of said fabric, opposite to the first face, is mainly made by said plurality of second yarns.

According to the invention, said warp-knitted fabric is subjected to a finishing process comprising a surface abrasion phase of said second face for lifting the fibers of said second yarns (with respect to the rest of the fabric).

According to another aspect, the invention relates to a production process of a blanket for ungulates. The process comprises:
- providing a plurality of first yarns and a plurality of second yarns;
- warp-knit weaving said plurality of first yarns with said plurality of second yarns for making a warp-knitted fabric in which said first yarns and said second yarns are directly mutually knitted so that a first face of said fabric is mainly made by said plurality of first yarns, and a second face of said fabric, opposite to the first face, is mainly made by said plurality of second yarns.

According to the invention, said production process comprises performing a finishing process on said warp-knitted fabric, said finishing process comprising a surface abrasion phase of said second face for lifting the fibers of said second yarns.

By "warp-knitted fabric" it is meant a fabric made by a warp-knit weaving process, i.e. a process in which typically one or more pluralities of individual yarns are fed to the knitting area with the yarns substantially parallel to each other and wherein the path of the individual yarns in the knitted fabric is on average substantially parallel to a main knitting direction (the direction along which the growth of the fabric takes place).

By "mainly made of" referred to a face of said fabric it is meant that a given plurality of yarns makes at least 60%, more preferably at least 80%, even more preferably at least 90%, of a surface extension of said face of the fabric.

According to the Applicant, the aforementioned warp-knitted fabric having the first face mainly made by the first yarns, and the second face, mainly made by the second yarns, and furthermore subjected to the abrasion phase, allows to realize a blanket with a straight side (e.g. the first face) suitable for being faced away from the animal, and a reverse side (e.g. the second face) which, thanks to abrasion, results equipped with a surface finish (in jargon called "hand") with soft looking (e.g. similar to "fleece" fabric).

In this way it is possible realizing a blanket capable, thanks to the second face, of absorbing the sweat (or residual humidity) present on the animal's coat, transferring it to the outside, by passing along the knitted fibers of the fabric, up to the first face, where a knitted structure remains (e.g. chain and weft structure) which results breathable. The water at the first side tends to evaporate: the removal of heat directly from the animal's skin is thus limited.

Furthermore, the breathable and at the same time soft structure in the part in direct contact with the animal creates a layer of thermal insulation.

In this way, the desired comfort features (e.g. absorbent and breathable qualities, thermal protection) for the animal are obtained with a single layer of warp-knitted fabric with contiguous structure (e.g. where the "raised fibres" structure of the second face and the knitted structure of the first face are contiguous to each other without interruption), avoiding the use of three-dimensional fabrics (also known as spaced fabrics, which typically involve the realization of two distinct fabrics which are then joined together, as described in the aforementioned prior art document), and therefore limiting costs, times and difficulties of production (the spaced fabrics result in fact more elastic than the fabric of the present invention, for example complicating the preparation operations, such as the cutting to size).

The aforementioned structure of the knitted fabric according to the present invention also allows to limit the action of abrasion of the second face to substantially only the fibers of the second yarns, with limited, if not zero, risk of abrading the first yarns, maintaining the respective knitted structure intact and cohesive.

The Applicant has realized that the use of a warp-knitted technology for realizing the aforementioned fabric lends particularly itself to the realization of a fabric with the aforementioned features, in particular a first and a second face mainly made by the plurality respectively of first and second yarns, allowing simplicity and cost-effectiveness of production.

The present invention in one or both of the aforementioned aspects may exhibit one or more of the following preferred features.

Preferably said finishing process is one or more of the following processes: raising, brushing, emerising, more preferably it is a raising process.

The applicant has identified these processes as particularly advantageous for the treatment of the second face.

Preferably said surface abrasion phase is mainly performed onto, more preferably it only involves, said second yarns. In this way, the risk of lifting the fibers of the first yarns is limited, up to eliminated, maintaining the knitted structure in the remaining part of the fabric.

Preferably said warp-knitted fabric is heat-set. Preferably said process comprises heat setting said warp-knitted fabric, more preferably before said performing said finishing process. In this way, subsequent operations are facilitated (e.g. finishing, preparing, etc.).

Preferably said first and/or second yarns are multifilament synthetic fibres. In this way they are robust and economical.

Preferably each first yarn has count between 250 dtex and 450 dtex, more preferably between 300 dtex and 400 dtex. In this way it is robust and lightweight at the same time. Preferably each second yarn has count between 550 dtex and 750 dtex, more preferably between 600 dtex and 700 dtex. In this way it is robust. Furthermore, in this way it is suitable to be subjected to the abrasion phase with limited risk of extensive breakage.

Preferably said second yarns are textured. In this way they are particularly suitable for being subjected to the aforementioned finishing process.

In one embodiment said first yarns are textured.

Preferably said first yarns are (entirely) made of polypropylene (PP). In this way they are suitable for realizing the knitted portion of the fabric, comprising the first face.

Preferably said second yarns are (entirely) made of polyester (PE). In this way they are particularly suitable for being subjected to the finishing process.

In one embodiment, said first yarns are (entirely) made of polyester, and preferably said second yarns are (entirely) made of polypropylene.

Preferably said fabric does not comprise further yarns in addition to said first and second yarns. In this way the composition of the fabric is simple.

Preferably said warp-knitted fabric is (entirely) made with a single warp-knit weaving process. Preferably said warp-knit weaving is (entirely) performed with a single warp-knit weaving process.

The structure of the fabric according to the present invention is particularly suitable for being made in this way, to the advantage of limited production times and costs.

Preferably said warp-knitted fabric is made by means of a weaving machine of Raschel type. Preferably said weaving is performed by means of a weaving machine of Raschel type. This type of machine has proven to be particularly suitable for producing the knitted fabric according to the present invention.

Preferably said weaving machine comprises a (more preferably single) needle bar (in jargon the machine is called "single needle"). The fabric according to the present invention is in fact obtainable by means of a machine of this type as it is not a three-dimensional (or spaced) fabric, which in order to be realized requires a machine having at least two distinct needle bars.

Preferably said weaving machine comprises a chain bar.

Preferably said weaving machine comprises a first weft bar.

Preferably said weaving machine comprises a second weft bar.

Preferably said chain bar and said second weft bar are arranged on mutually opposite sides of said first weft bar (e.g. with reference to the weaving machine of Raschel type). Preferably said plurality of first yarns comprises a first and a second set of first yarns. Preferably providing said plurality of first yarns comprises providing a first and a second set of first yarns.

Preferably said warp-knit weaving comprises feeding said first and second sets of first yarns respectively to said chain bar and to said first weft bar.

Preferably said warp-knit weaving comprises feeding said plurality of second yarns to said second weft bar.

Preferably said warp-knitted fabric comprises a chain weave made by means of said first set of first yarns. Preferably said chain weave is an open-knit straight chain weave. Preferably said chain bar realizes a chain weave, more preferably an open-knit straight chain weave. In this way the fabric is robust and durable.

Preferably said warp-knitted fabric comprises a weft weave made by means of said second set of first yarns. Preferably said weft weave is a tricot-type mixed weft weave. Preferably said first weft bar realizes a weft weave, more preferably a tricot-type mixed weft weave. The Applicant has realized that this type of weft weave improves the stability of the knitted fabric.

Preferably said warp-knitted fabric comprises a further weft weave made by means of said plurality of second yarns. Preferably said second weft bar realizes a further weft weave.

The Applicant has realized that the aforementioned types of weaves result particularly advantageous for realizing the warp-knitted fabric according to the present invention in simple and effective way.

Preferably said (mixed tricot-type) weft weave has throw between five and seven needles. Preferably said further weft weave has throw between four and six needles. These throws have proven to be particularly suitable for the realization of the warp-knitted fabric, for example in terms of balance between strength and flexibility/lightness given to the fabric.

Preferably said needle bar, said chain bar and said first and second weft bars comprise respective thread guides. Preferably each thread guide has fineness between ten and fourteen needles/thumb. These finenesses of the thread guides that make up the aforementioned bars have proven to be particularly suitable for realizing the warp-knitted fabric.

### Brief description of the figures

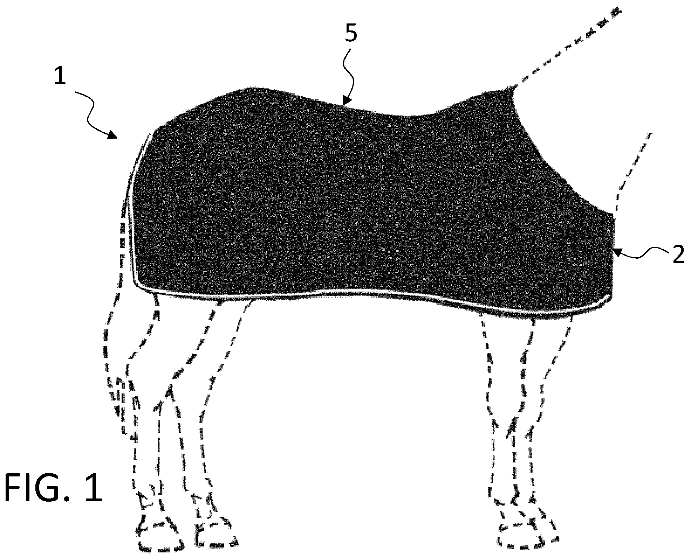

Figure 1 schematically shows a blanket for ungulates according to the present invention;
figure 2 shows a section of the blanket of figure 1 in purely schematic way.

### Detailed description of some embodiments of the invention

The features and the advantages of the present invention will be further clarified by the following detailed description of some embodiments, presented by way of example and not as a limitation of the present invention, with reference to the attached figures.

In the figures, with the number 1 it is indicated a blanket for ungulates. The blanket comprises a warp-knitted fabric 2. The warp-knitted fabric 2 comprises a plurality of first yarns 3 and a plurality of second yarns 4.

The first yarns 3 and the second yarns 4 are directly mutually knitted so that a first face 5 of the fabric 2 is mainly made by the plurality of first yarns 3, and a second face 6 of the fabric 2, opposite to the first face 5, is mainly made by the plurality of second yarns 4.

Exemplarily the first and second yarns are multifilament synthetic fibres. In particular, the first yarns are exemplarily entirely made of polypropylene PP and the second yarns are entirely made of polyester PE.

Exemplarily each first yarn 3 has count equal to about 330 dtex, and each second yarn 4 has count equal to about 660 dtex.

Exemplarily the second yarns are textured.

Exemplarily the fabric 2 does not comprise further yarns in addition to the first and second yarns.

The blanket 1 is produced according to a production process exemplarily comprising providing the plurality of first yarns 3 and of second yarns 4.

It is provided warp-knit weaving the plurality of first yarns with the plurality of second yarns for making the warp-knitted fabric 2.

In one preferred embodiment the warp-knitted fabric 2 is entirely made with a single warp-knit weaving process by means of a weaving machine of Raschel type (not shown, as example of known type).

Preferably the weaving machine comprises a single needle bar, a chain bar and a first and second weft bar.

Exemplarily the chain bar and the second weft bar are arranged at mutually opposite sides of the first weft bar. This configuration of the bars, in combination with a predetermined feeding of the plurality of first and second yarns to the bars (described in detail below) allows to obtain in simple and effective way the warp-knitted fabric according to the present invention with the first and the second face mainly made respectively by the plurality of first yarns and by the plurality of second yarns.

Exemplarily the plurality of first yarns 3 comprises a first and a second set of first yarns, comprising first yarns identical to each other but fed to different bars.

In particular, in the present preferred embodiment, the warp-knit weaving exemplarily provides feeding the first and second set of first yarns 3 respectively to the chain bar and to the first weft bar.

Exemplarily the plurality of second yarns 4 is instead fed to the second weft bar.

Preferably the chain bar performs an open-knit straight chain weave.

Preferably the first weft bar makes a mixed tricot-type weft weave with throw on six needles, and the second weft bar preferably makes a further weft weave with throw on five needles.

In this way the warp-knitted fabric is exemplarily equipped with a open-knit straight chain weave performed by means of the first set of first yarns 3, a mixed tricot-type weft weave performed by means of the second set of first yarns 3 and a further weft weave performed by means of the plurality of second yarns 4.

Preferably the needle bar, the chain bar and the first and second weft bar comprise respective thread guides, each thread guide having a fineness equal to twelve needles/thumb (i.e. they preferably have a fineness of class E12). In other terms, each bar is threaded with the respective type of yarns in order to have twelve yarns per thumb.

The warp-knitted fabric 2 produced is exemplarily subjected to heat setting, for example by passing through a rameuse.

Exemplarily the warp-knitted fabric (heat-set) is exemplarily subjected to a finishing process comprising a surface abrasion phase of the second face for lifting the fibers of the second yarns 4 with respect to the rest of the fabric 2.

Exemplarily this finishing process is a raising process and the surface abrasion phase involves substantially only the second yarns 4. To this end, the penetration depth of the needles of the raising machine can be suitably calibrated for penetrating the fabric, at the second face, to a depth such to interact with the second yarns 4, without substantially contacting the first yarns 3.

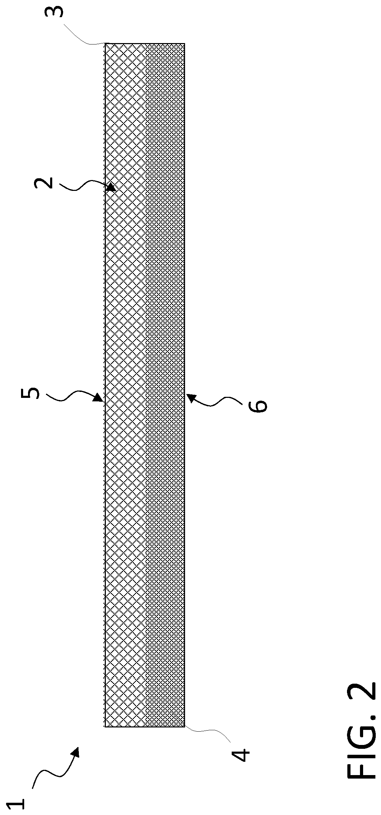

In alternative embodiments the finishing process may be a brushing or grinding process. At the end of the production process described above, the fabric exemplarily presents itself as a double-face fabric (schematically shown in fig. 2) wherein, at the first face 5, the knitted structure realized by the first and second set of first yarns 3 remains exemplarily visible (which, without wanting to limit to any theory, qualitatively acts as the supporting structure of the fabric 2). At the second face 6 the fabric appears exemplarily similar to the "fleece" fabric wherein the fibers of the second yarns 4 have been lifted (and tangled between them), in order to make it no longer visible (and/or no longer present) a well-defined knitted structure at the second face.

With reference to the figure 2, it is observed that the two distinct layers shown, each comprising a respective face of the fabric, are only due to reasons of graphic schematization, while they do not find an effective response in the real knitted fabric. **In** the real knitted fabric according to the present invention, the portion of fabric in which the knitted structure is present, realized from the first yarns and which realizes the first face, gradually transmutes into the "lifted fibers" structure (e.g. "fleece" effect) which realizes the second side (after the finishing process), seamlessly.

Exemplarily the production process is typically completed with final packaging phases of the blanket, for example the cutting to size and the possible preparation of closure/fixing laces for the animal (for example of a known type).

In use, the knitted fabric 2 is typically placed on the animal with the second face 6 at (and typically in contact) the animal's coat, for performing, thanks to the abraded structure (e.g. brushed), an absorption function of the humidity present on the coat, which is then transferred to the first face at which it is released (e.g. by evaporation).

## Claims

1. Blanket (1) for ungulates comprising a warp-knitted fabric (2), wherein said warp-knitted fabric (2) comprises a plurality of first yarns (3) and a plurality of second yarns (4), **characterised by**:
the first (3) and the second yarns (4) being directly mutually knitted so that a first face (5) of said fabric (2) is mainly made by said plurality of first yarns (3), and a second face (6) of said fabric (2), opposite to the first face (5), is mainly made by said plurality of second yarns (4), and wherein said warp-knitted fabric (2) is subjected to a finishing process comprising a surface abrasion phase of said second face (6) for lifting fibres of said second yarns (4).

2. Blanket (1) according to claim 1, wherein said finishing process is one or more of the following processes: raising, brushing, emerising, wherein said surface abrasion phase is mainly performed onto said second yarns (4), and wherein said warp-knitted fabric (2) is heat-set.

3. Blanket (1) according to any one of the previous claims, wherein said first (3) and second yarns (4) are multifilament synthetic fibres, wherein each first yarn has count between 300 dtex and 400 dtex, wherein each second yarn (4) has count between 600 dtex and 700 dtex, and wherein said second yarns (4) are textured.

4. Blanket (1) according to any one of the previous claims, wherein said first yarns (3) are made of polypropylene, and wherein said second yarns (4) are made of polyester.

5. Blanket (1) according to any one of the previous claims, wherein said plurality of first yarns (3) comprises a first and second set of first yarns, wherein said warp-knitted fabric (2) is made by means of a textile machine of Raschel type, wherein said warp-knitted fabric (2) comprises an open-knit straight chain weave made by means of said first set of first yarns, a tricot-type mixed weft weave made by means of said second set of first yarns and a further weft weave made by means of said plurality of second yarns (4).

6. Production process of a blanket (1) for ungulates, said process comprising:
- providing a plurality of first yarns (3) and a plurality of second yarns (4);
- warp-knit weaving said plurality of first yarns (3) with said plurality of second yarns (4) for making a warp-knitted fabric (2) in which said first yarns (3) and said second yarns (4) are directly mutually knitted so that a first face (5) of said fabric (2) is mainly made by said plurality of first yarns (3), and a second face (6) of said fabric (2), opposite to the first face (5), is mainly made by said plurality of second yarns (4);
- performing a finishing process on said warp-knitted fabric (2), said finishing process comprising a surface abrasion phase of said second face (6) for lifting fibres of said second yarns (4).

7. Process according to claim 6, wherein said warp-knit weaving is performed with a single warp-knit weaving process.

8. Process according to claim 6 or 7, wherein said weaving is performed by means of a weaving machine of Raschel type, wherein said weaving machine comprises a single needle bar, wherein said weaving machine comprises a chain bar and a first and a second weft bar, wherein providing said plurality of first yarns (3) comprises providing a first and a second set of first yarns, and wherein said weaving comprises:
- feeding said first and second sets of first yarns respectively to said chain bar and to said first weft bar;
- feeding said plurality of second yarns (4) to said second weft bar.

9. Process according to claim 8, wherein said chain bar makes an open-knit straight chain weave, wherein said first weft bar makes a tricot-type mixed weft weave with throw between five and seven needles, wherein said second weft bar makes a further weft weave with throw between four and six needles, and wherein said needle bar, said chain bar and said first and second weft bars comprise respective thread guides, each thread guide having a fineness between ten and fourteen needles/thumb.

10. Process according to any one of claims from 6 to 9, wherein said finishing process is one or more of the following processes: raising, brushing, emerising, wherein said surface abrasion phase is mainly performed onto said second yarns (4), and wherein said process comprises heat setting said warp knitted fabric (2), preferably before said performing said finishing process.

## Patentansprüche

1. Decke (1) für Huftiere, umfassend ein Kettengewirk (2), wobei das Kettengewirk (2) eine Vielzahl von ersten Garnen (3) und eine Vielzahl von zweiten Garnen (4) umfasst, **dadurch gekennzeichnet, dass**:
die ersten Garne (3) und die zweiten Garne (4) direkt miteinander verstrickt sind, so dass eine erste Fläche (5) des Gewebes (2) hauptsächlich durch die Vielzahl von ersten Garnen (3) gebildet ist, und eine zweite Fläche (6) des Gewebes (2), gegenüberliegend zur ersten Fläche (5), hauptsächlich durch die Vielzahl von zweiten Garnen (4) gebildet ist, und wobei das Kettengewirk (2) einem Veredelungsverfahren unterzogen ist, umfassend eine Oberflächenabriebphase der zweiten Fläche (6), um Fasern der zweiten Garne (4) aufzurichten.

2. Decke (1) nach Anspruch 1, wobei das Veredelungsverfahren eines oder mehrere der folgenden Verfahren ist: Rauhen, Bürsten, Emerisieren, wobei die Oberflächenabriebphase hauptsächlich an den zweiten Garnen (4) durchgeführt wird, und wobei das Kettengewirk (2) wärmefixiert ist.

3. Decke (1) nach einem der vorhergehenden Ansprüche, wobei die ersten Garne (3) und die zweiten Garne (4) multifilamentäre Synthesefasern sind, wobei jedes erste Garn (3) eine Feinheit zwischen 300 dtex und 400 dtex aufweist, wobei jedes zweite Garn (4) eine Feinheit zwischen 600 dtex und 700 dtex aufweist, und wobei die zweiten Garne (4) texturiert sind.

4. Decke (1) nach einem der vorhergehenden Ansprüche, wobei die ersten Garne (3) aus Polypropylen hergestellt sind, und wobei die zweiten Garne (4) aus Polyester hergestellt sind.

5. Decke (1) nach einem der vorhergehenden Ansprüche, wobei die Vielzahl von ersten Garnen (3) ein erstes und ein zweites Set von ersten Garnen umfasst, wobei das Kettengewirk (2) mittels einer Textilmaschine vom Typ Raschel hergestellt ist, wobei das Kettengewirk (2) ein offenes Kettengewirke mit geraden Maschen umfasst, hergestellt mittels des ersten Sets von ersten Garnen, ein Trikotgewirke mit gemischtem Schuss, hergestellt mittels des zweiten Sets von ersten Garnen, und ein weiteres Schussgewirke, hergestellt mittels der Vielzahl von zweiten Garnen (4).

6. Herstellungsverfahren einer Decke (1) für Huftiere, umfassend:
- Bereitstellen einer Vielzahl von ersten Garnen (3) und einer Vielzahl von zweiten Garnen (4);
- Kettenwirken der Vielzahl von ersten Garnen (3) mit der Vielzahl von zweiten Garnen (4) zum Herstellen eines Kettengewirkes (2), in dem die ersten Garne (3) und die zweiten Garne (4) direkt miteinander verstrickt sind, so dass eine erste Fläche (5) des Gewebes (2) hauptsächlich durch die Vielzahl von ersten Garnen (3) gebildet ist, und eine zweite Fläche (6) des Gewebes (2), gegenüberliegend zur ersten Fläche (5), hauptsächlich durch die Vielzahl von zweiten Garnen (4) gebildet ist;
- Durchführen eines Veredelungsverfahrens an dem Kettengewirk (2), wobei das Veredelungsverfahren eine Oberflächenabriebphase der zweiten Fläche (6) umfasst, um Fasern der zweiten Garne (4) aufzurichten.

7. Verfahren nach Anspruch 6, wobei das Kettenwirken mit einem einzigen Kettenwirkverfahren durchgeführt wird.

8. Verfahren nach Anspruch 6 oder 7, wobei das Kettenwirken mittels einer Wirkmaschine vom Typ Raschel durchgeführt wird, wobei die Wirkmaschine eine einzige Nadelbarre umfasst, wobei die Wirkmaschine eine Kettenlegebarre und eine erste und eine zweite Schussbarre umfasst, wobei das Bereitstellen der Vielzahl von ersten Garnen (3) das Bereitstellen eines ersten und eines zweiten Sets von ersten Garnen umfasst, und wobei das Kettenwirken umfasst:
- Zuführen des ersten und des zweiten Sets von ersten Garnen jeweils zu der Kettenlegebarre und zu der ersten Schussbarre;
- Zuführen der Vielzahl von zweiten Garnen (4) zu der zweiten Schussbarre.

9. Verfahren nach Anspruch 8, wobei die Kettenlegebarre ein offenes Kettengewirke mit geraden Maschen herstellt, wobei die erste Schussbarre ein Trikotgewirke mit gemischtem Schuss mit einem Wurf zwischen fünf und sieben Nadeln herstellt, wobei die zweite Schussbarre ein weiteres Schussgewirke mit einem Wurf zwischen vier und sechs Nadeln herstellt, und wobei die Nadelbarre, die Kettenlegebarre sowie die erste und zweite Schussbarre jeweilige Fadenführer umfassen, wobei jeder Fadenführer eine Feinheit zwischen zehn und vierzehn Nadeln/Zoll aufweist.

10. Verfahren nach einem der Ansprüche 6 bis 9, wobei das Veredelungsverfahren eines oder mehrere der folgenden Verfahren ist: Rauhen, Bürsten, Emerisieren, wobei die Oberflächenabriebphase hauptsächlich an den zweiten Garnen (4) durchgeführt wird, und wobei das Verfahren die Wärmefixierung des Kettengewirkes (2) umfasst, vorzugsweise vor dem Durchführen des Veredelungsverfahrens.

## Revendications

1. Couverture (1) pour ongulés comprenant un tissu tricoté chaîne (2), dans lequel ledit tissu tricoté chaîne (2) comprend une pluralité de premiers fils (3) et une pluralité de deuxièmes fils (4), **caractérisée par** :
les premiers fils (3) et les deuxièmes fils (4) étant directement tricotés mutuellement de sorte qu'une première face (5) dudit tissu (2) est principalement réalisée par ladite pluralité de premiers fils (3), et une deuxième face (6) dudit tissu (2), opposée à la première face (5), est principalement réalisée par ladite pluralité de deuxièmes fils (4), et dans lequel ledit tissu tricoté chaîne (2) est soumis à un procédé de finition comprenant une phase d'abrasion de surface de ladite deuxième face (6) pour relever les fibres desdits deuxièmes fils (4).

2. Couverture (1) selon la revendication 1, dans lequel ledit procédé de finition est un ou plusieurs des procédés suivants : grattage, brossage, émerisage, dans lequel ladite phase d'abrasion de surface est principalement effectuée sur lesdits deuxièmes fils (4), et dans lequel ledit tissu tricoté chaîne (2) est thermofixé.

3. Couverture (1) selon l'une quelconque des revendications précédentes, dans lequel lesdits premiers fils (3) et deuxièmes fils (4) sont des fibres synthétiques multifilaments, dans lequel chaque premier fil (3) a un titrage compris entre 300 dtex et 400 dtex, dans lequel chaque deuxième fil (4) a un titrage compris entre 600 dtex et 700 dtex, et dans lequel lesdits deuxièmes fils (4) sont texturés.

4. Couverture (1) selon l'une quelconque des revendications précédentes, dans lequel lesdits premiers fils (3) sont réalisés en polypropylène, et dans lequel lesdits deuxièmes fils (4) sont réalisés en polyester.

5. Couverture (1) selon l'une quelconque des revendications précédentes, dans lequel ladite pluralité de premiers fils (3) comprend un premier et un deuxième ensemble de premiers fils, dans lequel ledit tissu tricoté chaîne (2) est réalisé au moyen d'une machine textile de type Raschel, dans lequel ledit tissu tricoté chaîne (2) comprend un tricot chaîne ouvert en mailles droites réalisé au moyen dudit premier ensemble de premiers fils, un tricot de type tricot chaîne avec trame mixte réalisé au moyen dudit deuxième ensemble de premiers fils et un autre tricot de trame réalisé au moyen de ladite pluralité de deuxièmes fils (4).

6. Procédé de production d'une couverture (1) pour ongulés, ledit procédé comprenant :
- fournir une pluralité de premiers fils (3) et une pluralité de deuxièmes fils (4) ;
- réaliser un tricotage chaîne de ladite pluralité de premiers fils (3) avec ladite pluralité de deuxièmes fils (4) pour réaliser un tissu tricoté chaîne (2) dans lequel lesdits premiers fils (3) et lesdits deuxièmes fils (4) sont directement tricotés mutuellement de sorte qu'une première face (5) dudit tissu (2) est principalement réalisée par ladite pluralité de premiers fils (3), et une deuxième face (6) dudit tissu (2), opposée à ladite première face (5), est principalement réalisée par ladite pluralité de deuxièmes fils (4) ;
- exécuter un procédé de finition sur ledit tissu tricoté chaîne (2), ledit procédé de finition comprenant une phase d'abrasion de surface de ladite deuxième face (6) pour relever les fibres desdits deuxièmes fils (4).

7. Procédé selon la revendication 6, dans lequel ledit tricotage chaîne est réalisé avec un seul procédé de tricotage chaîne.

8. Procédé selon la revendication 6 ou 7, dans lequel ledit tricotage est réalisé au moyen d'une machine de tricotage de type Raschel, dans lequel ladite machine de tricotage comprend une seule barre d'aiguilles, dans lequel ladite machine de tricotage comprend une barre de mailles chaîne et une première et une deuxième barre de trame, dans lequel fournir ladite pluralité de premiers fils (3) comprend fournir un premier et un deuxième ensemble de premiers fils, et dans lequel ledit tricotage comprend :
- alimenter lesdits premier et deuxième ensembles de premiers fils respectivement à ladite barre de mailles chaîne et à ladite première barre de trame ;
- alimenter ladite pluralité de deuxièmes fils (4) à ladite deuxième barre de trame.

9. Procédé selon la revendication 8, dans lequel ladite barre de mailles chaîne réalise un tricot chaîne ouvert en mailles droites, dans lequel ladite première barre de trame réalise un tricot de type tricot chaîne avec trame mixte avec lancer entre cinq et sept aiguilles, dans lequel ladite deuxième barre de trame réalise un autre tricot de trame avec lancer entre quatre et six aiguilles, et dans lequel ladite barre d'aiguilles, ladite barre de mailles chaîne et lesdites première et deuxième barres de trame comprennent des guides-fils respectifs, chaque guide-fil ayant une finesse comprise entre dix et quatorze aiguilles/pouce.

10. Procédé selon l'une quelconque des revendications 6 à 9, dans lequel ledit procédé de finition est un ou plusieurs des procédés suivants : grattage, brossage, émerisage, dans lequel ladite phase d'abrasion de surface est principalement effectuée sur lesdits deuxièmes fils (4), et dans lequel ledit procédé comprend la thermofixation dudit tissu tricoté chaîne (2), de préférence avant ladite exécution dudit procédé de finition.
